# EUROPÄISCHE PATENTSCHRIFT

(11) **EP 4 328 876 B1**
(45) Veröffentlichungstag und Bekanntmachung des Hinweises auf die Patenterteilung: **12.11.2025**
(21) Anmeldenummer: 23189611.9
(22) Anmeldetag: 03.08.2023
(51) Int. Cl.: G07C 9/00, H04W 4/40, B60R 25/24, B60R 25/20, H04W 4/02, H04W 12/06, G06Q 20/40, G06Q 20/32, H04W 12/63, H04W 4/80

(54) **VERFAHREN ZUM AUTHENTIFIZIEREN EINES NUTZERS, EIN SYSTEM UND EIN KRAFTFAHRZEUG**
METHOD FOR AUTHENTICATING A USER, A SYSTEM AND A MOTOR VEHICLE
PROCÉDÉ D'AUTHENTIFICATION D'UN UTILISATEUR, SYSTÈME ET VÉHICULE AUTOMOBILE

(30) Priorität: 22.08.2022 DE 102022208670
(43) Veröffentlichungstag der Anmeldung: 28.02.2024
(73) Patentinhaber: VOLKSWAGEN AG, 38440 Wolfsburg (DE)
(72) Erfinder: Ette, Bernd, 38442 Wolfsburg (DE); Wollentin, Tim, 38116 Braunschweig (DE); Franz, Ditmar, 31226 Peine (DE)

(56) Entgegenhaltungen:
- WO-A1-2021/204467
- DE-A1- 102013 010 993
- DE-A1- 102020 103 083
- US-A1- 2020 309 932
- US-A1- 2022 186 533

## Beschreibung

Die Erfindung betrifft ein Verfahren zum Authentifizieren eines Nutzers eines Kraftfahrzeugs, ein System zur Durchführung des Verfahrens und ein das System umfassendes Kraftfahrzeug.

Um einen schlüssellosen Zugang zu einem Fahrzeug zu ermöglichen, weisen moderne Fahrzeuge verschiedene Systeme auf, die auf der Grundlage von Funktechnologien mobile Endgeräte oder Transponder von Nutzern in der Fahrzeugumgebung erkennen können.

Ein Beispiel für ein System, welches einen passiven Zugang zu einem Fahrzeug ermöglicht, wird in dem Dokument US 2020/247363 A1 beschrieben. Das dort offenbarte System baut eine Bluetooth-Low-Energy(BLE)- oder eine Ultrabreitband(UWB)-Kommunikationsverbindung mit einem tragbaren Gerät auf. Über einen Niederfrequenzsender sendet das System eine Anfrage an das tragbare Gerät und empfängt eine entsprechende Antwort. Anhand der in der empfangenen Antwort enthaltenen Informationen autorisiert das System das tragbare Gerät. In Reaktion auf die Autorisierung des tragbaren Geräts führt das System eine Fahrzeugfunktion aus, einschließlich der Entriegelung einer Tür des Fahrzeugs, der Entriegelung eines Kofferraums des Fahrzeugs oder der Ermöglichung des Startens des Fahrzeugs.

Ein gängiges Problem hierbei ist, dass die verwendeten Systeme die Quelle des empfangenen Funksignals nicht verlässlich authentifizieren können, nämlich, ob das empfangene Funksignal tatsächlich von dem Nutzer stammt oder von einer Quelle stammt, die mittels krimineller Energie die Information des Funksignals beschafft hat. Zur Begegnung derartiger Sicherheitsprobleme fragen moderne Systeme Positions- und Bewegungsdaten des tragbaren Geräts ab, um auf diese Weise den Nutzer zu orten und auf Basis der Ortungsinformationen den Nutzer zu authentifizieren.

Bekannte Systeme zur Ortung der Nutzer zum Zwecke der Authentifizierung sind in den Dokumenten DE 10 2017 201 308 A1, DE 10 2022 100 583 A1 oder DE 10 2020 103 083 A1 beschrieben. Weitere relevante Offenbarungen sind in den Dokumenten US 2022/0186533 A1, DE 10 2013 010 993 A1, US 2020/0309932 A1 und WO 2021/204467 A1 beschrieben.

Bei der Ortung der Nutzer zu deren Authentifizierung sind viele bekannte Systeme allerdings davon abhängig, dass die mobilen Endgeräte oder Transponder der Nutzer zum Aufbau einer entsprechenden Funkkommunikation und zur Erfassung geeigneter Positions- und Bewegungsdaten geeignet sind. Problematisch dabei ist, dass eine Vielzahl an älteren Modellen von mobilen Endgeräte auf dem Markt vorhanden sind, die entsprechende Voraussetzungen meist nicht erfüllen. Entweder fehlt es ihnen an der erforderlichen Hardware oder die verwendete Software ist veraltet und daher nicht in der Lage, beispielsweise eine Kommunikation mit dem System des Fahrzeugs aufzubauen oder Ortungsinformationen zu beschaffen. Dies betrifft insbesondere Geräte, die weder eine UWB-Kommunikation noch eine moderne Bluetooth-Kommunikation (insbesondere mindestens Bluetooth Standard Version 5.1) ermöglichen. Mit der Bluetooth Version 5.1 wurde unter anderem die Funktion der Funkpeilung (sogenanntes Direction Finding) eingeführt, die es den Geräten ermöglicht, die Richtung von Objekten zu erkennen.

Der Erfindung liegt nun die Aufgabe zugrunde, ein Verfahren zu entwickeln, welches eine Authentifizierung einer größeren Anzahl von Nutzern erlaubt, sowie ein System zur Durchführung des Verfahrens bereitzustellen.

Die erfindungsgemäße Aufgabe wird gelöst durch ein Verfahren zum Authentifizieren eines Nutzers eines Kraftfahrzeugs, durch ein System zur Durchführung des Verfahrens und durch ein das System aufweisendes Kraftfahrzeug gemäß den unabhängigen Ansprüchen. Bevorzugte Weiterbildungen sind Gegenstand der jeweils rückbezogenen Unteransprüche.

Ein Aspekt betrifft ein Verfahren zum Authentifizieren eines Nutzers eines Kraftfahrzeugs. Das Kraftfahrzeug weist zwei zum Erfassen einer Position eines Nutzers ausgebildete Module auf, die jeweils ein zum Senden und Empfangen von UWB- und Bluetooth-Signalen, insbesondere von BLE-Signalen, eingerichteten Sendeempfänger, jeweils mit einer Antenne, aufweisen. Der Sendeempfänger ist insbesondere zum Senden und Empfangen von Signalen in sehr großen Frequenzbereichen, insbesondere in einem Frequenzbereich von 2,4 bis 10,6 GHz ausgebildet. Im Falle von UWB-Signalen ist der Sendeempfänger bevorzugt zum Senden und Empfangen von Signalen in einem Frequenzbereich von 3,5 bis 9 GHz, besonders bevorzugt in einem Frequenzbereich von 6 GHz bis 8,5 GHz, ausgebildet. Die Bluetooth-Kommunikation erfolgt bevorzugt in dem bekannten Frequenzband zwischen 2,402 GHz und 2,480 GHz. Bevorzugt ist die Bluetooth-Low-Energy-Funktechnologie vorgesehen.

Die Sendeleistung der UWB-Pulse ist gering. Die Bandbreite des UWB-Signals beträgt mindestens 500 MHz und der UWB-Sendeempfänger ist bevorzugt zum Senden von Signalen mit einer Sendeleistung zwischen 0,5 mW / -41,3 dBm/MHz ausgebildet. Ferner bevorzugt ist der Sendeempfänger gemäß dem Standard IEEE 802.15.4 (insbesondere den Abschnitten zum UWB PHY Layer) und bevorzugt gemäß dem Standard IEEE 802.15.4z ausgebildet. Durch die Streuung der Signale über derart große Frequenzbereiche stören UWB-Signale andere Funksignale nur minimal.

Unter Verwendung mindestens einer der Antennen wird ein über einen externen Sendeempfänger ausgesendetes Funksignal zur Autorisierung des Nutzers empfangen. Mit anderen Worten übermittelt der Nutzer unter Verwendung seines mobilen Endgeräts oder eines Transponders ein Befehlssignal inklusive Autorisierungsinformationen an das Fahrzeug zur Durchführung einer der an sich bekannten Fahrzeugfunktionen. Diese Kommunikation erfolgt bevorzugt mindestens auf Grundlage der UWB- und/oder Bluetooth-Funktechnologie.

Der Sendeempfänger wird zum Senden von UWB-Pulsen und Empfangen von Impulsantworten unter Verwendung von mindestens einer der Antennen und zum Durchführen eines auf Channel Impulse Response(CIR)-Messungen basierenden Verfahrens unter Verwendung der Antennen angesteuert. Basierend auf den empfangenen Impulsantworten und einem Ergebnis der CIR-Messungen wird die Position und/oder ein Bewegungsgradient des Nutzers ermittelt. Bei den CIR-Messungen sendet eine Antenne ein UWB-Signal zu einer anderen Antenne, die das ausgesendete Signal empfängt, während bei dem Verfahren mit den empfangenen Impulsantworten die gleiche Antenne, die das UWB-Signal ausgesendet hat, auch die Impulsantwort empfängt. Insofern wird hierbei ein Echo der abgetasteten Umgebung empfangen. Mit anderen Worten erfolgt erfindungsgemäß eine Ortung des Nutzers auf Grundlage der UWB-Funktechnologie, ohne dass eine Kommunikation zwischen dem Fahrzeug und dem externen Sendeempfänger erforderlich ist. Folglich können auch Nutzer mit mobilen Endgeräten in unmittelbarer Nähe zum Fahrzeug geortet werden, die ein mobiles Endgerät oder einen Transponder nutzen, die weder eine UWB-fähige Kommunikation noch den erforderlichen Bluetooth Standard in der Version ab 5.1 aufweisen.

Aufgrund der zeitlich stark lokalisierten UWB-Pulse ist es möglich, aus empfangenen UWB-Pulsen mit deren sich aus dem Einfluss der Umgebung auf den gesendeten UWB-Puls ergebender Impulsantwort Informationen zu dem Propagationsweg der UWB-Pulse zu extrahieren. Einflüsse der Umgebung basieren auf physikalischen Phänomenen, die den UWB-Puls von seinem geometrisch vorgeschriebenen Weg ablenken, wie beispielsweise Brechung, Beugung, Reflexion oder Dämpfung. Es ist offensichtlich, dass sich die Laufzeiten der Signale oder Signalpakete entlang verschiedener Propagationswege unterscheiden und in Abhängigkeit von der Anwesenheit oder Abwesenheit von Objekten in oder nahe der Propagationswege verändern. Auch die Impulsform der Signale oder Signalpakete wird in Abhängigkeit von der Anwesenheit oder Abwesenheit von Objekten in oder nahe der Propagationswege beeinflusst. Somit lässt sich anhand der Messung von entlang dieser Propagationswege übertragener Signale oder Signalpakete vorteilhaft auf die Anwesenheit oder Abwesenheit von Objekten in oder nahe der Propagationswege schließen.

Bei einer empfangenen Impulsantwort eines von derselben Antenne ausgesendeten UWB-Pulses bildet diese Impulsantwort eine Vielzahl von zeitlich aufgelösten Echosignalen ab, die sich in Abhängigkeit von dem Abstand dieser Objekte und/oder Personen zum Sendeempfänger in der Impulsantwort niederschlagen. Durch den Vergleich der Echosignale über zeitlich versetzte UWB-Pulse und deren empfangenen Impulsantworten können Rückschlüsse auf Ortsänderungen der Objekte und/oder Personen im Bezug zum Sendeempfänger getroffen werden. Aus den Ortsänderungen können die Bewegungsgradienten ermittelt werden. Die Echosignale können bevorzugt anhand von Amplituden- und/oder Phaseninformationen ermittelt und miteinander verglichen werden. Dadurch ist es vorteilhaft möglich, die Umgebung oder den Innenraum des Fahrzeugs unter Verwendung von mindestens einer Antenne orts- und zeitaufgelöst abzutasten. Selbstverständlich können auch die Antennen der beiden Module oder Antennen von weiteren Modulen das Verfahren der empfangenen Impulsantworten durchführen, um aus verschiedenen Winkeln die Umgebung und/oder den Innenraum des Fahrzeugs orts- und zeitaufgelöst abzutasten.

Je weiter ein Objekt von dem Sendeempfänger weg ist, desto später wird das dem Objekt zugeordnete Echosignal vom Sendeempfänger empfangen. So lässt sich eine Reichweite des Sendeempfängers beschränken, indem ein Empfangen der Impulsantwort nach einer der gewünschten Reichweite entsprechenden Zeit unterbrochen wird und/oder ein neuer UWB-Puls ausgesendet wird. In der Zeit, in welcher der UWB-Puls über den Sendeempfänger ausgesendet wird, ist kein Empfangen der Impulsantwort durch den zum Senden verwendeten Sendeempfänger möglich.

Ferner vorteilhaft ist es zusätzlich unter Verwendung von mindestens zwei Antennen möglich, die Umgebung mittels der CIR-Messungen ortsaufgelöst abzutasten. Durch mehrfaches Versenden von UWB-Pulsen über eine der Antennen und anhand der durch die andere Antenne empfangenen Impulsantworten können Veränderungen in der Umgebung - beispielsweis ein neu in dem abzutastenden Bereich befindliches Objekt - durch den Vergleich der zeitversetzten Impulsantworten orts- und zeitaufgelöst sichtbar gemacht werden. Auf diese Weise ist die Detektion eines in den abzutastenden Bereich eintretenden Objektes verlässlich möglich. Insbesondere ein besonders bevorzugtes konstantes und/oder repetitives Abtasten der Umgebung mittels CIR-Messungen erlaubt dabei eine entsprechende Überwachung des abzutastenden Bereichs.

Die CIR-Messungen beinhalten beispielsweise das Versenden von vordefinierten Signalen oder Signalpaketen (sogenannten Telegrammen) zwischen den (zumindest) zwei Antennen. Neben einem direkten Propagationsweg des Signals oder der Signalpakete zwischen den Antennen gibt es eine Vielzahl weiterer Propagationswege, die beispielsweise Reflektionen von Objekten aus dem Innen- oder Außenraum des Fahrzeugs einschließen. Basierend auf einer ausreichenden Anzahl und/oder einer vorteilhaften Anordnung der Antennen ermöglichen diese Propagationswege eine Abdeckung von weiten Teilen eines Raums, beispielsweise eines Fahrzeuginnenraums oder eines Fahrzeugaußenraums. Selbstverständlich können die CIR-Messungen zwischen einer Vielzahl von Modulen erfolgen, um abhängig von der Anordnung der Module entsprechende Bereiche abzutasten.

Ferner erfolgt eine Authentifizierung des Nutzers durch Zuordnen des Nutzers zu dem empfangenen Funksignal basierend auf der ermittelten Position und/oder des ermittelten Bewegungsgradienten des Nutzers. Bevorzugt umfassen die Module durch ihre im Fahrzeug vorgegebene Anordnung einen vorbestimmten Authentifikationsbereich, innerhalb dessen sich der Nutzer aufhalten muss, um vom Fahrzeug authentifiziert zu werden. Die Reichweite des Authentifikationsbereichs ist bevorzugt durch die eingestellte Reichweite des Sendeempfängers einstellbar und/oder von der Anordnung der Antennen für die CIR-Messungen abhängig. Unter Verwendung der Bewegungsgradienten wird bevorzugt ermittelt, in welche Richtung sich der Nutzer bewegt und/oder ob dieser eine in einer Speichereinheit hinterlegte Gestenbewegung durchführt. Beispielsweise können Nutzer von der Authentifizierung ausgenommen sein, die sich in eine Richtung vom Fahrzeug weg und/oder höchstens parallel zur Fahrzeugrichtung bewegen. In vorteilhafter weise werden dann nur Nutzer authentifiziert, die sich in eine Richtung zu dem Fahrzeug bewegen, also Nutzer, die mit einer höheren Wahrscheinlichkeit mit dem Fahrzeug interagieren und/oder in dieses einsteigen wollen. Aus den ermittelten Bewegungsgradienten werden ferner bevorzugt Gesten des Nutzers ermittelt, um eine Bedienung des Fahrzeugs oder eine Authentifizierung des Nutzers mittels einer Gestenbewegung zu ermöglichen. Folglich ist eine Bedienung des Fahrzeugs berührungslos per Hand oder Geste und/oder durch das mobile Endgerät und/oder den Transponder möglich. Durch die Kombination des Authentifikationsbereichs mit der ermittelten Bewegungsrichtung des Nutzers treten die jeweilig beschriebenen Vorteile gemeinsam ein. Eine über die Autorisierung hinausgehende Kommunikation zwischen dem Fahrzeug und dem externen Sendeempfänger ist erfindungsgemäß daher nicht erforderlich. Somit lassen sich auch Nutzer von veralteten oder aus anderen Gründen ungeeigneten mobilen Endgeräten anhand der ermittelten Positions- und/oder Bewegungsdaten authentifizieren, sodass ein größerer Nutzerkreis angesprochen wird.

In bevorzugter Ausgestaltung ist vorgesehen, dass die Sendeempfänger der beiden Module zum Durchführen eines auf Laufzeitmessungen basierenden Positionierungsverfahrens unter Verwendung der Antennen zum Ermitteln einer Position des externen Sendeempfängers angesteuert wird, wobei das Authentifizieren des Nutzers ferner durch Abgleichen der ermittelten Position und/oder des ermittelten Bewegungsgradienten des Nutzers mit der ermittelten Position des externen Sendeempfängers erfolgt. Als Positionierungsverfahren sind bevorzugt die Ankunftszeit (time of arrival - TOA), die Flugzeit (time of flight - TOF), die Zweiwege-Entfernung (two-way ranging - TWR), die Ankunftszeitdifferenz (time difference on arrival - TDOA), der Ankunftswinkel (angle of arrival - AOA), der Abflugwinkel (angle of departure - AOD) und/oder die Anzeige der empfangenen Signalstärke (received signal strength indication - RSSI) vorgesehen. Für die Zwecke des Positionierungsverfahrens sind bevorzugt die UWB- und/oder die Bluetooth-Funktechnologie vorgesehen. Mit anderen Worten erfolgt hierbei eine Ortung des externen Sendeempfängers mittels einer Funkkommunikation zwischen dem Fahrzeug und dem externen Sendeempfänger. Vorteilhaft kann die Positionsinformation über den externen Sendeempfänger mit den ermittelten Positions- und/oder Bewegungsdaten des Nutzers plausibilisiert (abgeglichen) werden und damit die Wahrscheinlichkeit von Falschauthentifizierungen reduziert werden. Bei mobilen Endgeräten, die den Bluetooth Standard einer Version unter 5.1 verwenden, erfolgt bevorzugt eine RSSI-Messung und deren Ergebnis wird mit den ermittelten Positions- und Bewegungsdaten des Nutzers plausibilisiert (abgeglichen).

In weiterer bevorzugter Ausgestaltung ist vorgesehen, dass mindestens einer oder beide der Sendeempfänger ferner eine zum Senden und Empfangen von NFC-Funksignalen (near field communication - NFC) eingerichtete NFC-Antenne umfasst, die eingerichtet ist, das Funksignal zur Autorisierung des Nutzers als NFC-Funksignal zu empfangen. Über die NFC-Antenne können Autorisierungsdaten auch von den mobilen Endgeräten oder Transpondern empfangen werden, die weder eine UWB- noch eine Bluetooth-Kommunikation mit dem Fahrzeug aufbauen können. Aufgrund der kurzen Reichweite von NFC von wenigen Centimetern bis höchstens 10 cm kann ein Nutzer unter Verwendung der ermittelten Position und/oder den ermittelten Bewegungsgradienten des Nutzers leicht authentifiziert werden. Mit anderen Worten wird bevorzugt im Falle einer erkannten NFC-Datenübertragung nur ein der Reichweite von NFC entsprechender kleiner Authentifizierungsbereich gewählt, innerhalb dessen sich der Nutzer aufhalten muss, um vom Fahrzeug authentifiziert zu werden. Bevorzugt ist der mindestens eine Sendeempfänger dazu eingerichtet, mittels der Antenne elektromagnetische Energie auf den externen Sendeempfänger zu übertragen. Somit können vorteilhaft Autorisierungsdaten über NFC ausgetauscht werden, auch wenn die Batterie des mobilen Endgeräts und/oder des Transponders entladen ist.

In weiterer bevorzugter Ausgestaltung ist vorgesehen, dass ein Autorisierungsstatus des authentifizierten Nutzers basierend auf dem empfangenen Funksignal und einer in einem Speicher hinterlegten Datenbank ermittelt wird. Hierdurch kann die Autorisierung und die anschließende Authentifizierung des Nutzers von dem Fahrzeug über ein zentrales System übernommen werden. Vorteilhaft muss das Fahrzeug nicht mit unterschiedlichen Systemen ausgestattet werden und Kosten können eingespart werden.

Die beiden Module werden bevorzugt zum Aussenden einer Anfrage für einen Bezahlvorgang unter Verwendung der Antennen und/oder der mindestens einen NFC-Antenne angesteuert, wenn die ermittelte Position des authentifizierten Nutzers einen vorbestimmten Abstand zum Kraftfahrzeug unterschreitet. Bevorzugt wird ein Bestätigungssignal zur Durchführung des Bezahlvorgangs unter Verwendung der Antennen und/oder der mindestens einen NFC-Antenne empfangen und der Autorisierungsstatus des authentifizierten Nutzers basierend auf dem empfangenen Bestätigungssignal angepasst. Mit anderen Worten ist das Fahrzeug dazu ausgebildet, Bezahlfunktionen unter Verwendung eines oder mehrerer Module zu übernehmen. Vorteilhaft muss das Fahrzeug nicht mit unterschiedlichen Systemen ausgestattet werden und Kosten können eingespart werden. Bevorzugt beträgt der vorbestimmte Abstand höchstens 5 m, vorzugsweise höchstens 2,5 m, besonders bevorzugt 0,1 bis 1,5 m. Durch die erfindungsgemäße Ermittlung der Position und/oder der Bewegungsgradienten kann der für die Bezahlfunktionen notwendige Höchstabstand von 1,5 m der miteinander kommunizierenden Geräte sichergestellt und damit eine zulässige Bezahlfunktion durch nur ein System implementiert werden.

Das Kraftfahrzeug führt bevorzugt mindestens eine Fahrzeugfunktion basierend auf dem Autorisierungsstatus des authentifizierten Nutzers durch. Besonders bevorzugt werden eine oder mehrere Fahrzeugtüren und/oder mindestens ein Fahrzeugfenster des Kraftfahrzeugs basierend auf dem Autorisierungsstatus des authentifizierten Nutzers geöffnet oder geschlossen. Vorteilhaft erfolgt das Durchführen der Fahrzeugfunktion selektiv, indem diese nur den autorisierten und authentifizierten Nutzern gestattet wird.

In weiterer bevorzugter Ausgestaltung ist vorgesehen, dass die Module derart angeordnet sind, dass das Ansteuern der Sendeempfänger zum Durchführen des auf Channel Impulse Response-Messungen basierenden Verfahrens und/oder das Senden der UWB-Pulse und Empfangen der Impulsantworten derart erfolgt, dass zumindest ein Zugangsbereich zum Kraftfahrzeug abgetastet wird. Der Zugangsbereich ist der Bereich des Kraftfahrzeugs, in welchem der Nutzer in das Kraftfahrzeug ein- oder aussteigen kann. Bevorzugt ist dies der Bereich um eine Einlasstür des Kraftfahrzeugs. Das Verfahren kann bei sämtlichen Ausgestaltungsarten der Türen wie Schiebe- oder Flügeltüren angewendet werden. Der Zugangsbereich umfasst bevorzugt den Bereich der Tür im geschlossenen Zustand zuzüglich eines angrenzenden Bereichs, der sich drei Meter, vorzugsweise zwei Meter, besonders bevorzugt einen Meter in das Fahrzeug hinein und/oder aus dem Fahrzeug hinaus erstreckt. Die Abtastung des Zugangsbereichs hat den Vorteil, dass eine automatische Autorisierung und Authentifizierung des Nutzers erfolgen kann, sodass der Nutzer bequem und bedienungslos in das Kraftfahrzeug einsteigen kann. Mit anderen Worten kann die Zutrittsberechtigung bei einem passiven Zugang des Nutzers automatisch erfolgen. Besondere Vorteile ergeben sich daher bei (fahrerlosen) selbstfahrenden Kraftfahrzeugen. Außerdem kann eine mögliche Kollision der sich schießenden Fahrertür mit einem Nutzer rechtzeitig erkannt und der Schließvorgang unterbrochen werden.

Bevorzugt ist der Authentifizierungsbereich von einem Zustand der Einlasstür und/oder von einer Position des Kraftfahrzeugs abhängig. In einem geschlossenen Zustand der Einlasstür und beim Anfahren beispielsweiser einer Haltestelle kann die Reichweite des Authentifizierungsbereichs größer sein, als bei einem geöffneten Zustand der Einlasstür. Dies trägt dem Umstand Rechnung, dass bei einer geöffneten Tür ein einsteigungswilliger Nutzer näher an das Fahrzeug herantritt. Beim Heranfahren des Kraftfahrzeugs an eine Haltestelle mit einer großen Reichweite des Authentifizierungsbereichs ist es vorteilhaft, wenn das Fahrzeug sehr früh Kenntnis darüber hat, welcher oder wie viele Nutzer an der Haltestelle in das Fahrzeug einsteigen wollen. Das Fahrzeug kann in diesem Fall vorbestimmte Fahrzeugfunktionen durchführen, um mit dem oder den Nutzern zu interagieren, insbesondere um Informationen auf einem Human Display Interface eines der Module anzuzeigen. Beispielsweise werden die Sitzplatzauslastung und weitere anzufahrende Haltestationen angezeigt. Darüber hinaus kann aber auch angezeigt werden, dass eine UWB- oder Bluetooth-Verbindung mit dem Nutzer nicht aufgebaut werden konnte und der Nutzer die Kommunikation über mittels NFC durchführen soll. Besonders bevorzugt erfolgen die CIR-Messungen und/oder die auf empfangenen Impulsantworten basierten Messungen erst beim Anfahren einer Haltestelle und/oder sobald sich ein mittels UWB, Bluetooth oder NFC autorisierter Nutzer im Fahrzeugumfeld befindet.

Die Module umfassen bevorzugt eine CAN-Schnittstelle (CAN-Interface), um miteinander verbindbar zu sein. Über die CAN-Schnittstelle wird bevorzugt ein Signal zur Initiierung einer Startphase übertragen, um die Position und/oder den Bewegungsgradienten des Nutzers zu bestimmen. Ebenfalls bevorzugt umfasst mindestens eines der Module eine Schnittstelle zur Kommunikation mit dem Nutzer (Human Machine Interface - HMI). Das HMI zeigt bevorzugt Echtzeitdaten an und/oder ermöglicht dem Nutzer, über eine grafische Oberfläche Eingaben zur Kommunikation mit dem Fahrzeug zu tätigen. Die Module sind ferner bevorzugt in einem für den Nutzer sichtbaren Bereich des Kraftfahrzeugs angeordnet. Ein für den Nutzer sichtbarer Bereich ist beispielsweise ein Fenster, insbesondere ein Fenster in der Einlasstür, eine Sitzlehne, eine Kopfstütze oder eine Türinnenverkleidung. Die Fenster können Trapezfenster oder feststehende Fenster sein.

Ein weiterer Aspekt betrifft ein System, welches zur Durchführung des erfindungsgemäßen Verfahrens ausgebildet ist. Das System weist ein erstes und ein zweites zum Erfassen einer Position eines Nutzers eingerichtetes Modul, jeweils mit einem Sendeempfänger, aufweisend eine zum Senden und Empfangen von UWB- und Bluetooth-Signalen eingerichtete Antenne, auf. Ferner umfasst das System eine mit den Sendeempfängern verbundene Steuereinheit, die dazu eingerichtet ist, ein über einen externen Sendeempfänger ausgesendetes Funksignal zur Autorisierung des Nutzers unter Verwendung mindestens einer der Antennen zu empfangen, die Sendeempfänger zum Senden von UWB-Pulsen und Empfangen von Impulsantworten unter Verwendung von mindestens einer der Antennen und zum Durchführen eines auf Channel Impulse Response(CIR)-Messungen basierenden Verfahrens unter Verwendung der Antennen anzusteuern, eine Position und/oder einen Bewegungsgradienten des Nutzers basierend auf den empfangenen Impulsantworten und einem Ergebnis der CIR-Messungen zu ermitteln, und durch Zuordnen des Nutzers zu dem empfangenen Funksignal basierend auf der ermittelten Position und/oder des ermittelten Bewegungsgradienten des Nutzers den Nutzer zu authentifizieren. Die mit dem Verfahren beschriebenen Merkmale und deren Vorteile lassen sich analog mit dem System verwirklichen und sind daher beliebig miteinander kombinierbar.

Obgleich das System im Hinblick auf eine Anwendungsform in einem Kraftfahrzeug beschrieben wurde, ist dieses nicht darauf beschränkt. Das System kann vielmehr bei sämtlichen Anwendungen verwendet werden, bei denen eine Zugangsberechtigung zum Steuern einer Tür, einer Klappe, eines Fensters und ähnliches zusätzlich authentifiziert werden soll.

Ein weiterer Aspekt betrifft ein Kraftfahrzeug, welches das oben genannte System aufweist. Die beiden Module sind auf einer Fahrzeugseite des Kraftfahrzeugs angeordnet, die einen Zugangsbereich zum Ein- und Aussteigen in das Kraftfahrzeug aufweist. Die mit dem Verfahren beschriebenen Merkmale und deren Vorteile lassen sich analog mit dem Kraftfahrzeug verwirklichen und sind daher beliebig miteinander kombinierbar.

In bevorzugter Ausgestaltung ist vorgesehen, dass mindestens eines der beiden Module in einem Abstand von höchstens 20 cm zu dem Zugangsbereich angeordnet ist. Bevorzugt sind die Module auf gegenüberliegenden Seiten der Einlasstür und/oder eines mittig und das andere auf einer der gegenüberliegenden Seiten angeordnet.

Die oben genannte Steuereinheit des Kraftfahrzeugs ist bevorzugt durch elektrische oder elektronische Bauteile oder Komponenten (Hardware) oder durch Firmware (ASIC) implementiert. Zusätzlich oder alternativ wird die Funktionalität der Steuereinheit beim Ausführen eines geeigneten Programms (Software) verwirklicht. Ebenfalls bevorzugt ist die Steuereinheit durch eine Kombination von Hardware, Firmware und/oder Software verwirklicht. Beispielsweise sind einzelne Komponenten der Steuereinheit zum Bereitstellen einzelner Funktionalitäten als separat integrierter Schaltkreis ausgebildet oder auf einem gemeinsamen integrierten Schaltkreis angeordnet.

Die einzelnen Komponenten der Steuereinheit sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise den Modulen, einer Zentralverriegelung, einem Motorcontroller, et cetera zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen, abgelegt sein.

Dem Fachmann ist ferner ersichtlich, dass die Funktionalitäten von mehreren Recheneinheiten (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Funktionalität der Steuereinheit zu verwirklichen.

Des Weiteren wird ein Computerprogramm beschrieben, umfassend Befehle, die bei der Ausführung des Programms durch einen Computer, wie beispielsweise eine Steuereinrichtung eines Kraftfahrzeugs aufweisend ein System mit einem ersten und einem zweiten zum Erfassen einer Position eines Nutzers eingerichteten Modul, jeweils mit einem Sendeempfänger, aufweisend eine zum Senden und Empfangen von UWB- und Bluetooth-Signalen eingerichtete Antenne, diesen veranlassen, das erfindungsgemäße Verfahren, insbesondere ein Verfahren zum Authentifizieren eines Nutzers eines Kraftfahrzeugs durchzuführen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Darstellung eines Verfahrens eines Kraftfahrzeugs gemäß einer Ausführungsform und
- Figur 2: eine schematische Darstellung eines Kraftfahrzeugs gemäß einer Ausführungsform.
- Figur 3: eine schematische Darstellung eines Systems gemäß einer Ausführungsform.

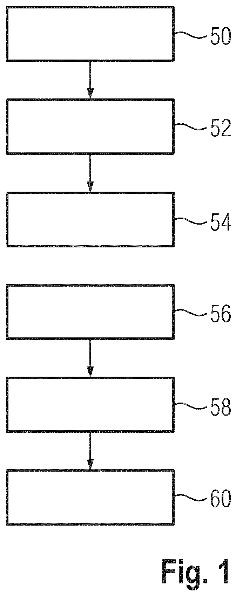

Die Figuren 1 bis 3 zeigen schematische Darstellungen eines hierin vorgeschlagenen Verfahrens, Systems und Kraftfahrzeugs, welche eine Authentifizierung einer größeren Anzahl von Nutzern eines Kraftfahrzeugs ermöglichen.

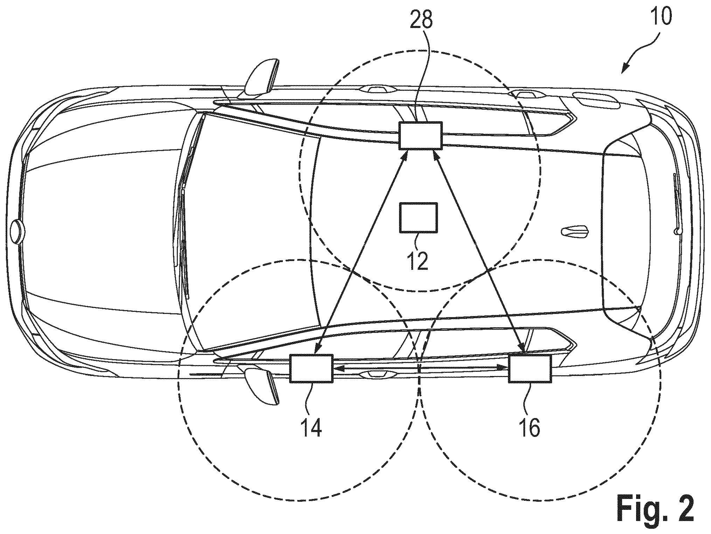

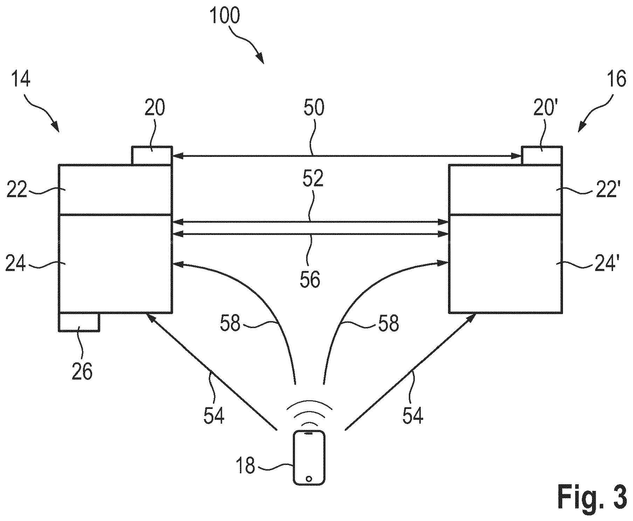

Das in Figur 1 schematisch dargestellte Verfahren ist zum Authentifizieren eines Nutzers eines Kraftfahrzeugs 10 (siehe Figur 2) geeignet. Das Verfahren wird im Zusammenhang mit dem in Figur 2 dargestellten Kraftfahrzeug 10 und dem in Figur 3 dargestellten System 100 beschrieben.

Das Kraftfahrzeug 10 weist ein erstes und ein zweites zum Erfassen einer Position eines Nutzers eingerichtetes Modul 14, 16 auf. Jedes Modul 14, 16 umfasst einen Sendeempfänger 22, 22' (siehe Figur 3), der wiederum eine zum Senden und Empfangen von UWB- und Bluetooth-Signalen eingerichtete Antenne 24, 24' umfasst. Die beiden Module 14, 16 sind beispielhaft auf der linken Seite des Kraftfahrzeugs 10 angeordnet. Genau genommen ist das erste Modul 14 in der mittig in dem Fenster der Fahrertür und in der Türinnenverkleidung angebracht, während das zweite Modul 16 in einem Trapezfenster der hinteren linken Fahrzeugtür und deren Innenverkleidung angeordnet ist. Zusätzlich ist ein exemplarisches baugleiches drittes Modul 28 auf der gegenüberliegenden Seite des Kraftfahrzeugs 10 (rechte Seite) in dem Holm zwischen Vorder- und Hintertür des Kraftfahrzeugs 10 angeordnet. Dies ist lediglich exemplarisch, um ein besseres Verständnis der vorliegenden Offenbarung zu ermöglichen.

Das Kraftfahrzeug 10 umfasst ferner eine mit den Sendeempfängern 22, 22' verbundene Steuereinheit 12, die dazu eingerichtet ist, ein über einen externen Sendeempfänger 18 (siehe Figur 3) ausgesendetes Funksignal zur Autorisierung des Nutzers unter Verwendung der Antennen 24, 24' der Module 14, 16, 28 zu empfangen. Die Steuereinheit 12 ist ferner dazu eingerichtet, die Sendeempfänger 22, 22' zum Senden von UWB-Pulsen und Empfangen von Impulsantworten unter Verwendung von mindestens einer der Antennen 24, 24' und zum Durchführen eines auf Channel Impulse Response(CIR)-Messungen basierenden Verfahrens unter Verwendung der Antennen 24, 24' anzusteuern und eine Position und einen Bewegungsgradienten des Nutzers basierend auf den empfangenen Impulsantworten und einem Ergebnis der CIR-Messungen zu ermitteln. Die CIR-Messungen unterscheiden sich von den empfangenen Impulsantworten dadurch, dass diese Telegramme zwischen den Modulen 14, 16, 28 senden, die in ihrem Propagationsweg durch Objekte in der Umgebung des Telegramms verändert werden. Mit anderen Wort wird ein ausgesendetes UWB-Signal eines Moduls und dessen Veränderungen auf dem Propagationsweg von einem anderen Modul empfangen (siehe Pfeile in Figur 2 zwischen den Modulen 14, 16, 28).

Bei dem Verfahren der empfangenen Impulsantworten wird hingegen das von der Antenne 24, 24' ausgesendete UWB-Signal von derselben Antenne 24, 24' empfangen. Insofern wird die Umgebung mittels einer Art Echosignal der Umgebung abgetastet. Eine exemplarische Reichweite der Module 14, 16, 28 bei Verwendung dieses Verfahrens ist in Figur 2 durch die gestrichelten Kreise angedeutet. Dies soll lediglich beispielhaft der Erläuterung dienen. Die Kreise, die in etwa einen Radius von einem Meter aufweisen, sind allerdings nicht auf diese Maßangabe beschränkt. Vielmehr können mit diesem Verfahren auch Reichweiten von bis zu 10 Meter vom jeweiligen Modul 14, 16 28 erzielt werden.

Die in Figur 2 exemplarisch dargestellte Anordnung der Module 14, 16 und 28 hat den Vorteil, dass sowohl der Fahrzeuginnenraum durch CIR-Messungen zwischen dem Modul 28 mit Modul 14 und Modul 16 sowie durch ein auf empfangenen Impulsantworten basierendes Verfahren mit dem Modul 28 abgetastet werden kann. Zugleich ist aber auch eine Abtastung der linken Umgebung des Kraftfahrzeugs 10 durch ein auf empfangenen Impulsantworten basierendes Verfahren mit den Modulen 14 und 16 und eines linken Zugangsbereichs des Kraftfahrzeugs 10 mittels CIR-Messungen zwischen den Modulen 14 und 16 möglich. Daraus folgt, dass mit den Modulen 14 und 16, die entlang der Fahrzeugrichtung und den linken Türen des Kraftfahrzeugs 10 angeordnet sind, ein- und aussteigende Passagiere (Nutzer des Kraftfahrzeugs 10) auf Basis des ermittelten Bewegungsgradienten erkannt werden können. Es ist offensichtlich, dass die hier genannten Vorteile auch durch andere Anordnungen der Module 14, 16, 28, insbesondere auf den anderen Fahrzeugseiten des Kraftfahrzeugs 10 oder durch eine andere Anzahl von Modulen erzielbar sind.

Die Steuereinheit 12 ist ferner eingerichtet, durch Zuordnen des Nutzers zu dem empfangenen Funksignal basierend auf der ermittelten Position und/oder des ermittelten Bewegungsgradienten des Nutzers den Nutzer zu authentifizieren. Ist die ermittelte Position und der ermittelte Bewegungsgradient des Nutzer plausibel dem empfangenen Funksignal zuordenbar, so wird der mittels des empfangenen Funksignals autorisierte Nutzer authentifiziert.

Das in Figur 3 beschriebene System 100 umfasst die beiden mit dem Kraftfahrzeug 10 beschriebenen Module 14 und 16. Jedes der Module 14, 16 umfasst eine CAN-Schnittstelle 20, 20', um die Module 14, 16 miteinander zu verbinden. Die Verbindung über die CAN-Schnittstellen 20, 20' wird genutzt, um eine Startphase des Verfahrens (erster Verfahrensschritt 50 in Figur 1) zu initiieren. Eine Startphase wird vom Kraftfahrzeug 10 initiiert, wenn dieses beispielsweise vorgegebene Routenpunkte wie Haltestellen anfährt.

Nach der Startphase werden die Antennen 24, 24' synchronisiert (zweiter Verfahrensschritt 52) und das Funksignal von dem externen Sendeempfänger 18 des Nutzers empfangen (dritter Verfahrensschritt 54). Abhängig von der Ausgestaltung des externen Sendeempfängers 18 ist das System 100 nicht nur in der Lage, eine UWB- und/oder Bluetooth-Kommunikation mit dem externen Sender 18 aufzubauen. Vielmehr umfasst wenigstens das Modul 14 eine NFC-Antenne 26, um mit dem externen Sendeempfänger 18 über NFC zu kommunizieren. Hierdurch können auch Nutzer autorisiert werden, die kein UWB- oder Bluetooth-fähiges mobiles Gerät (externer Sendeempfänger 18) verwenden.

Nachdem die Autorisierungsdaten des Nutzers über das Funksignal von dem System 100 empfangen sind, führt das System 100 CIR-Messungen und das Verfahren der empfangenen Impulsantworten mit den Modulen 14, 16 durch. Basierend auf den empfangenen Impulsantworten und einem Ergebnis der CIR-Messungen werden die Position und die Bewegungsgradienten des Nutzers ermittelt (fünfter Verfahrensschritt 58). Bei dieser Form der Ortung des Nutzers ist keine Kommunikation zwischen dem externen Sendeempfänger 18 und dem System 100 notwendig, sodass die Nutzer unabhängig von ihrem verwendeten mobilen Gerät wie Smartphone oder Transponder geortet werden. Insbesondere ist hierdurch die vorher problematische Ortung von Geräten mit einer Bluetooth Standard Version unterhalb von 5.1 möglich. Auch Nutzer von Geräten, die lediglich NFC-fähig sind, können somit vom System 100 geortet werden.

Auf Basis der ermittelten Position und der ermittelten Bewegungsgradienten des Nutzers wird dieser dem empfangenen Funksignal zur Autorisierung des Nutzers zugeordnet (sechster Verfahrensschritt 60), sodass der autorisierte Nutzer authentifiziert wird. Das System 100 ermöglich den Zugang zum Kraftfahrzeug 10, indem beispielsweise eine Fahrzeugtür geöffnet oder entriegelt wird. Abhängig von der konkreten Anwendung des Systems 100 können nach erfolgter Autorisierung und Authentifizierung des Nutzers auch andere Fahrzeugfunktionen wie ein mit der Kofferraumklappe oder dem Fahrzeugfenster verbundener Aktuator betätigt werden. Insofern ermöglichen das hierin vorgestellte Verfahren, das System 100 und das das System 100 umfassende Kraftfahrzeug 10 einen passiven Zugang des Nutzers des Kraftfahrzeugs 10. Mit anderen Worten kann der (autorisierte) Nutzer das Kraftfahrzeug 10 ohne aktives Zutun betreten oder verlassen.

### Bezugszeichenliste

- 10: Kraftfahrzeug
- 12: Steuereinheit
- 14: erstes Modul
- 16: zweites Modul
- 18: externer Sendeempfänger
- 20, 20': CAN-Schnittstelle
- 22, 22': Sendeempfänger
- 24, 24': UWB-/BLE-Antenne
- 26: NFC-Antenne
- 28: drittes Modul
- 50: erster Verfahrensschritt
- 52: zweiter Verfahrensschritt
- 54: dritter Verfahrensschritt
- 56: vierter Verfahrensschritt
- 58: fünfter Verfahrensschritt
- 60: sechster Verfahrensschritt
- 100: System

## Patentansprüche

1. Verfahren zum Authentifizieren eines Nutzers eines Kraftfahrzeugs (10), wobei das Kraftfahrzeug (10) zwei zum Erfassen einer Position eines Nutzers ausgebildete Module (14, 16) aufweist, die jeweils einen zum Senden und Empfangen von UWB- und Bluetooth-Signalen eingerichteten Sendeempfänger (22, 22'), jeweils mit einer Antenne (24, 24'), aufweisen, das Verfahren aufweisend die folgenden Schritte:
Empfangen eines über einen externen Sendeempfänger (18) ausgesendeten Funksignals zur Autorisierung des Nutzers unter Verwendung mindestens einer der Antennen (24, 24'),
Ansteuern der Sendeempfänger (22, 22') zum Senden von UWB-Pulsen und Empfangen von Impulsantworten unter Verwendung von mindestens einer der Antennen (24, 24') und zum Durchführen eines auf Channel Impulse Resonse, CIR,-Messungen basierenden Verfahrens unter Verwendung der Antennen (24, 24'),
Ermitteln der Position und/oder eines Bewegungsgradienten des Nutzers basierend auf den empfangenen Impulsantworten und einem Ergebnis der CIR-Messungen, und
Authentifizieren des Nutzers durch Zuordnen des Nutzers zu dem empfangenen Funksignal basierend auf der ermittelten Position und/oder des ermittelten Bewegungsgradienten des Nutzers.

2. Verfahren nach Anspruch 1, ferner umfassend die folgenden Schritte:
Ansteuern der Sendeempfänger (22, 22') der beiden Module (14, 16) zum Durchführen eines auf Laufzeitmessungen basierenden Positionierungsverfahrens unter Verwendung der Antennen (24, 24') zum Ermitteln einer Position des externen Sendeempfängers (18),
wobei das Authentifizieren des Nutzers ferner durch Abgleichen der ermittelten Position und/oder des ermittelten Bewegungsgradienten des Nutzers mit der ermittelten Position des externen Sendeempfängers (18) erfolgt.

3. Verfahren nach einem der vorherigen Ansprüche, wobei mindestens einer der Sendeempfänger (22, 22') ferner eine zum Senden und Empfangen von NFC-Funksignalen eingerichtete NFC-Antenne (26) umfasst, die eingerichtet ist, das Funksignal zur Autorisierung des Nutzers als NFC-Funksignal zu empfangen.

4. Verfahren nach einem der vorherigen Ansprüche, ferner aufweisend:
Ermitteln eines Autorisierungsstatus des authentifizierten Nutzers basierend auf dem empfangenen Funksignal und einer in einem Speicher hinterlegten Datenbank.

5. Verfahren nach Anspruch 4, ferner umfassend die folgenden Schritte:
Ansteuern der beiden Module (14, 16) zum Aussenden einer Anfrage für einen Bezahlvorgang unter Verwendung der Antennen (24, 24') und/oder der mindestens einen NFC-Antenne (26), wenn die ermittelte Position des authentifizierten Nutzers einen vorbestimmten Abstand zum Kraftfahrzeug (10) unterschreitet,
Empfangen eines Bestätigungssignal zur Durchführung des Bezahlvorgangs unter Verwendung der Antennen (24, 24') und/oder der mindestens einen NFC-Antenne (26), und
Anpassen des Autorisierungsstatus des authentifizierten Nutzers basierend auf dem empfangenen Bestätigungssignal.

6. Verfahren nach Anspruch 4 oder 5, ferner umfassend:
Öffnen mindestens einer Fahrzeugtür und/oder mindestens eines Fahrzeugfensters des Kraftfahrzeugs (10) basierend auf dem Autorisierungsstatus des authentifizierten Nutzers.

7. Verfahren nach einem der vorherigen Ansprüche, wobei die Module (14, 16) derart angeordnet sind, dass das Ansteuern der Sendeempfänger (22, 22') zum Durchführen des auf Channel Impulse Response-Messungen basierenden Verfahrens und/oder das Senden der UWB-Pulse und Empfangen der Impulsantworten derart erfolgt, dass ein Zugangsbereich zum Kraftfahrzeugs (10) abgetastet wird.

8. System (100), aufweisend:
ein erstes und ein zweites zum Erfassen einer Position eines Nutzers eingerichtetes Modul (14, 16) jeweils mit einem Sendeempfänger (22, 22'), aufweisend eine zum Senden und Empfangen von UWB- und Bluetooth-Signalen eingerichtete Antenne (24, 24'),
eine mit den Sendeempfängern (22, 22') verbundene Steuereinheit (12), die dazu eingerichtet ist:
ein über einen externen Sendeempfänger (18) ausgesendetes Funksignal zur Autorisierung des Nutzers unter Verwendung mindestens einer der Antennen (24, 24') zu empfangen,
die Sendeempfänger (22, 22') zum Senden von UWB-Pulsen und Empfangen von Impulsantworten unter Verwendung von mindestens einer der Antennen (24, 24') und zum Durchführen eines auf Channel Impulse Response, CIR,-Messungen basierenden Verfahrens unter Verwendung der Antennen (24, 24') anzusteuern,
eine Position und/oder einen Bewegungsgradienten des Nutzers basierend auf den empfangenen Impulsantworten und einem Ergebnis der CIR-Messungen zu ermitteln, und
durch Zuordnen des Nutzers zu dem empfangenen Funksignal basierend auf der ermittelten Position und/oder des ermittelten Bewegungsgradienten des Nutzers den Nutzer zu authentifizieren.

9. Kraftfahrzeug (10), aufweisend das System (100) nach Anspruch 8, wobei die beiden Module (14, 16) auf einer Fahrzeugseite des Kraftfahrzeugs (10) angeordnet sind, die einen Zugangsbereich zum Ein- und Aussteigen in das Kraftfahrzeug (10) aufweist.

10. Kraftfahrzeugs (10) nach Anspruch 9, wobei mindestens eines der beiden Module (14, 16) in einem Abstand von höchstens 20 cm zu dem Zugangsbereich angeordnet ist.

## Claims

1. Method for authenticating a user of a motor vehicle (10), wherein the motor vehicle (10) comprises two modules (14, 16) designed to detect a position of a user, each comprising a transceiver (22, 22') configured to transmit and receive UWB and Bluetooth signals, each transceiver having an antenna (24, 24'), the method comprising the following steps:
receiving a radio signal transmitted via an external transceiver (18) for authorizing the user, using at least one of the antennas (24, 24'),
controlling the transceivers (22, 22') in order to transmit UWB pulses and receive impulse responses using at least one of the antennas (24, 24'), and in order to carry out a method based on channel impulse response, CIR, measurements using the antennas (24, 24'),
determining the position and/or a movement gradient of the user on the basis of the received impulse responses and a result of the CIR measurements, and
authenticating the user by assigning the user to the received radio signal on the basis of the determined position and/or the determined movement gradient of the user.

2. Method according to claim 1, further comprising the following steps:
controlling the transceivers (22, 22') of the two modules (14, 16) in order to carry out a positioning method based on transit time measurements using the antennas (24, 24'), in order to determine a position of the external transceiver (18),
wherein the authentication of the user further takes place by comparing the determined position and/or the determined movement gradient of the user with the determined position of the external transceiver (18).

3. Method according to either of the preceding claims, wherein at least one of the transceivers (22, 22') further comprises an NFC antenna (26) which is configured to transmit and receive NFC radio signals, and which is configured to receive the radio signal for authorizing the user as an NFC radio signal.

4. Method according to any of the preceding claims, further comprising:
determining an authorization status of the authenticated user on the basis of the received radio signal and a database stored in a memory.

5. Method according to claim 4, further comprising the following steps:
controlling the two modules (14, 16) in order to send a request for a payment process using the antennas (24, 24') and/or the at least one NFC antenna (26), when the determined position of the authenticated user falls below a predetermined distance from the motor vehicle (10),
receiving a confirmation signal for carrying out the payment process using the antennas (24, 24') and/or the at least one NFC antenna (26), and
adjusting the authorization status of the authenticated user on the basis of the received confirmation signal.

6. Method according to either claim 4 or claim 5, further comprising:
opening at least one vehicle door and/or at least one vehicle window of the motor vehicle (10) on the basis of the authorization status of the authenticated user.

7. Method according to any of the preceding claims, wherein the modules (14, 16) are arranged such that the control of the transceivers (22, 22') in order to carry out the method based on channel impulse response measurements, and/or the transmission of the UWB pulses and reception of the impulse responses takes place in such a way that an access region to the motor vehicle (10) is scanned.

8. System (100) comprising:
a first and a second module (14, 16) configured to detect a position of a user, each having a transceiver (22, 22') which comprises an antenna (24, 24') configured to transmit and receive UWB and Bluetooth signals,
a control unit (12), which is connected to the transceivers (22, 22') and configured to:
receive a radio signal transmitted via an external transceiver (18) in order to authorize the user, using at least one of the antennas (24, 24'),
control the transceivers (22, 22') in order to transmit UWB pulses and receive impulse responses using at least one of the antennas (24, 24') and in order to carry out a method based on channel impulse response, CIR, measurements using the antennas (24, 24'),
determine a position and/or a movement gradient of the user on the basis of the received impulse responses and a result of the CIR measurements, and
authenticate the user by assigning the user to the received radio signal on the basis of the determined position and/or the determined movement gradient of the user.

9. Motor vehicle (10) comprising the system (100) according to claim 8,
wherein the two modules (14, 16) are arranged on a vehicle side of the motor vehicle (10), which vehicle side has an access region for getting into and out of the motor vehicle (10).

10. Motor vehicle (10) according to claim 9, wherein at least one of the two modules (14, 16) is arranged at a distance of at most 20 cm from the access region.

## Revendications

1. Procédé d'authentification d'un utilisateur d'un véhicule automobile (10), dans lequel le véhicule automobile (10) présente deux modules (14, 16), conçus pour acquérir une position d'un utilisateur, qui présentent chacun un émetteur-récepteur (22, 22') destiné à émettre et recevoir des signaux UWB et Bluetooth, comportant respectivement une antenne (24, 24'), le procédé présentant les étapes suivantes :
réception d'un signal radio émis par un émetteur-récepteur externe (18) pour autoriser l'utilisateur à l'aide d'au moins l'une des antennes (24, 24'),
commande des émetteurs-récepteurs (22, 22') pour émettre des impulsions UWB et recevoir des réponses impulsionnelles à l'aide d'au moins l'une des antennes (24, 24') et pour réaliser un procédé basé sur des mesures de résonance d'impulsion de canal, CIR, à l'aide des antennes (24, 24'),
détermination de la position et/ou d'un gradient de mouvement de l'utilisateur sur la base des réponses impulsionnelles reçues et d'un résultat des mesures CIR, et
authentification de l'utilisateur en associant l'utilisateur au signal radio reçu sur la base de la position et/ou du gradient de mouvement déterminé(e) de l'utilisateur.

2. Procédé selon la revendication 1, comprenant en outre les étapes suivantes :
commande des émetteurs-récepteurs (22, 22') des deux modules (14, 16) pour réaliser un procédé de positionnement basé sur des mesures de temps de propagation à l'aide des antennes (24, 24') pour déterminer une position de l'émetteur-récepteur externe (18),
dans lequel l'authentification de l'utilisateur s'effectue en outre en faisant correspondre la position déterminée et/ou le gradient de mouvement déterminé de l'utilisateur avec la position déterminée de l'émetteur-récepteur externe (18).

3. Procédé selon l'une des revendications précédentes, dans lequel au moins l'un des émetteurs-récepteurs (22, 22') comprend en outre une antenne NFC (26) destinée à émettre et recevoir des signaux radio NFC, qui est destinée à recevoir le signal radio d'autorisation de l'utilisateur en tant que signal radio NFC.

4. Procédé selon l'une des revendications précédentes, présentant en outre :
la détermination d'un statut d'autorisation de l'utilisateur authentifié sur la base du signal radio reçu et d'une base de données stockée dans une mémoire.

5. Procédé selon la revendication 4, comprenant en outre les étapes suivantes :
commande des deux modules (14, 16) pour envoyer une demande pour une opération de paiement à l'aide des antennes (24, 24') et/ou de l'au moins une antenne NFC (26), lorsque la position déterminée de l'utilisateur authentifié est en dessous d'une distance prédéterminée par rapport au véhicule automobile (10),
réception d'un signal de confirmation pour réaliser l'opération de paiement à l'aide des antennes (24, 24') et/ou de l'au moins une antenne NFC (26), et
ajustement du statut d'autorisation de l'utilisateur authentifié sur la base du signal de confirmation reçu.

6. Procédé selon la revendication 4 ou 5, comprenant en outre :
l'ouverture d'au moins une portière de véhicule et/ou d'au moins une fenêtre de véhicule du véhicule automobile (10) sur la base du statut d'autorisation de l'utilisateur authentifié.

7. Procédé selon l'une des revendications précédentes, dans lequel les modules (14, 16) sont agencés de telle sorte que la commande des émetteurs-récepteurs (22, 22') pour réaliser le procédé basé sur des mesures de réponse impulsionnelle de canal et/ou l'émission des impulsions UWB et la réception des réponses impulsionnelles sont effectuées de telle sorte qu'une zone d'accès au véhicule automobile (10) est balayée.

8. Système (100), présentant :
un premier et un second module (14, 16) destinés à acquérir une position d'un utilisateur, comportant respectivement un émetteur-récepteur (22, 22'), présentant une antenne (24, 24') destinée à émettre et recevoir des signaux UWB et Bluetooth,
une unité de commande (12) reliée aux émetteurs-récepteurs (22, 22') et qui est destinée à :
recevoir un signal radio émis par un émetteur-récepteur externe (18) pour autoriser l'utilisateur à l'aide d'au moins l'une des antennes (24, 24'),
commander les émetteurs-récepteurs (22, 22') pour émettre des impulsions UWB et recevoir des réponses impulsionnelles à l'aide d'au moins l'une des antennes (24, 24') et pour réaliser un procédé basé sur des mesures de réponse impulsionnelle de canal, CIR, à l'aide des antennes (24, 24'),
déterminer une position et/ou un gradient de mouvement de l'utilisateur sur la base des réponses impulsionnelles reçues et d'un résultat des mesures CIR, et
authentifier l'utilisateur en associant l'utilisateur au signal radio reçu sur la base de la position déterminée et/ou du gradient de mouvement déterminé de l'utilisateur.

9. Véhicule automobile (10), présentant le système (100) selon la revendication 8, dans lequel les deux modules (14, 16) sont agencés sur un côté de véhicule du véhicule automobile (10) qui présente une zone d'accès pour monter et descendre du véhicule automobile (10).

10. Véhicule automobile (10) selon la revendication 9, dans lequel au moins l'un des deux modules (14, 16) est agencé à une distance d'au plus 20 cm de la zone d'accès.
